# DEMANDE DE BREVET EUROPEEN

(11) **EP 1 905 820 A1**
(43) Date de publication de la demande: **02.04.2008**
(21) Numéro de dépôt: 07301364.1
(22) Date de dépôt: 14.09.2007
(51) Int. Cl.: C12G 1/00, A23N 15/02

(54) **Table de triage pour vendange**

(30) Priorité: 29.09.2006 FR 0654033
(71) Demandeur: EARL Famille Caille, 33330 Saint Emilion (FR)
(72) Inventeur: Caille, Jean-Philippe, 69300, Caluire (FR)
(74) Mandataire: Palix, Stéphane

(57) **Abrégé**

Table de triage pour vendange (1) permettant de trier manuellement la vendange par visite visuelle, comportant un plateau tournant (10) de forme générale circulaire sur laquelle est acheminée la vendange non triée, et une ouverture centrale (18), destinée à recevoir la vendange triée, et agencée à faplomb d'un convoyeur de sortie (20), **caractérisée** en ce que le plateau comporte une zone surélevée (16) située à l'intérieur de la zone périphérique (14), destinée à empêcher la vendange de tomber inopinément dans l'ouverture centrale (18).

## Description

### Domaine technique

L'invention se rattache au domaine du matériel viticole, et plus particulièrement les équipements utilisés pour le traitement de la vendange. Elle vise plus spécifiquement une table de triage, permettant la visite visuelle des grappes vendangées, en vue de l'élimination des grappes non conformes aux exigences de qualité fixées par l'exploitant.

L'invention vise plus particulièrement une nouvelle structure de table de triage qui permet d'améliorer la qualité de l'opération de tri, et donc la qualité de la vendange destinée au pressurage et éventuellement à l'égrappage.

### Techniques antérieures

De façon générale, les opérations de vendange permettent de récolter des grappes de raisins qui ont été sélectionnées par les vendangeurs, avec des degrés variables en termes de maturation et de qualité sanitaire. De même, lors de la vendange, les éléments indésirables tels que les feuilles peuvent être récoltés, et doivent être éliminés avant que le raisin n'entre dans la chaîne de traitements qui conduira au pressurage.

La présence de ces éléments indésirables, ainsi que la disparité de la qualité du raisin récolté sont relativement importantes dans le cas de vendange effectuée mécaniquement. Un tri reste également nécessaire même dans le cas d'une vendange manuelle, puisque des grappes présentant des grains endommagés ou dégradés peuvent avoir échappé à l'attention du vendangeur.

C'est pourquoi de manière générale, il est nécessaire de procéder à une opération de tri, par visite visuelle, au cours de laquelle un ou plusieurs opérateurs éliminent (des grappes ou raisins vendangés) les éléments indésirables, ou les raisins ou grappes abîmés.

Ainsi, de façon générale, les tables de triage connues à ce jour se présentent sous la forme d'un convoyeur, alimenté en entrée par les bacs de raisin issus de la vendange. Ce convoyeur défile en continu devant un ou plusieurs opérateurs, qui retirent du convoyeur les éléments indésirables, pour les mettre au rebut.

Le problème qui se pose avec ce type de table de triage réside dans le fait que la vendange défile en continu, et qu'il est ainsi possible qu'un élément indésirable ou une grappe dégradée échappe à l'attention des opérateurs en charge du tri, et soit ensuite acheminée par erreur à la chaîne d'égrappage et de pressurage.

Ainsi, lorsque la quantité de raisins déposés sur la table de triage est trop importante, un défilement à vitesse normale augmente les risques de voir un élément indésirable ne pas être éliminé.

Des solutions ont déjà été proposées pour améliorer le triage, en particulier l'automatiser, ce qui est nécessaire dans le cas de traitement de vendange mécanique. Les solutions telles que décrites dans le document FR 2 617 017 et FR 6 626 202 ne sont pas réellement satisfaisantes, dans la mesure où elles fonctionnent sur un principe de criblage des grains de raisins, ou par passage de ces derniers au travers de plaques perforées d'orifices de diamètre calibré. En effet, des éléments indésirables possédant des dimensions de l'ordre de celle des baies de raisins ne peuvent pas être efficacement éliminés. En outre, de telles machines ne permettent pas d'éliminer des grains de raisins qui sont dégradés, mais elles permettent seulement de séparer des objets présentant des formes nettement différentes de celles des grumes.

En outre et surtout, de tels appareils sont spécifiquement dédiés à la vendange mécanique, et sont totalement inopérants pour le triage de vendange en grappe entière.

Un des objectifs de l'invention est de fournir une table de triage qui permette d'augmenter la qualité de l'opération de tri, en éliminant tout risque de voir un élément indésirable demeuré dans la vendange, en échappant à l'attention des opérateurs de triage.

### Exposé de l'invention

L'invention concerne donc une table de triage pour vendange permettant de trier manuellement la vendange par visite visuelle. Une telle machine est plus particulièrement destinée à la vendange manuelle, par tri de grappes entières. Cette table comporte un plateau tournant de forme générale circulaire sur la zone périphérique de laquelle est acheminée la vendange non triée. Ce plateau comporte une ouverture centrale destinée à recevoir la vendange triée, cette ouverture étant agencée à l'aplomb d'un convoyeur de sortie, permettant d'acheminer la vendange triée vers les machines de traitement ultérieur.

Conformément à l'invention, la table se caractérise en ce que le plateau comporte une zone surélevée, située dans l'intérieur de la zone périphérique sur laquelle repose la vendange à trier, cette zone surélevée servant de frontière pour empêcher la vendange non triée de tomber inopinément dans l'ouverture centrale d'évacuation.

Autrement dit, l'invention consiste à amener la vendange non triée sur une table tournante, sur laquelle elle demeure tant qu'un opérateur n'a pas sélectionné les grappes conformes aux exigences de qualité, en les déposant dans l'ouverture centrale, afin qu'elles soient ensuite acheminées vers leur fin de traitement ultérieur.

En d'autres termes, il n'y a pas de risque de voir les grappes non conformes échapper à la vigilance des opérateurs, puisque seules les grappes jugées conformes par les opérateurs sont autorisées à poursuivre leur cheminement dans la chaîne de traitement de la vendange.

En pratique, la géométrie de la pièce peut être adaptée en fonction de la vitesse de production souhaitée, et du nombre d'opérateurs de tri susceptibles d'être présents autour de la machine.

Avantageusement en pratique, le plateau tournant peut posséder une zone périphérique sensiblement plane, sur laquelle la vendange non triée s'étale de manière à passer devant chaque opérateur qui peut ainsi effectuer visuellement le contrôle des grappes à trier.

Cette zone périphérique sensiblement plane peut être légèrement inclinée pour assurer un écoulement par gravité du jus de raisin résultant de l'écrasement des grumes dans les opérations de vendange et de transport jusqu'à la table de triage.

En pratique, la zone surélevée peut présenter une forme tronconique, avec une pente orientée vers l'extérieur, de telle sorte que les grappes qui tombent lors de leur entrée sur la table roulent automatiquement vers la zone périphérique plane où elles seront ultérieurement examinées.

Avantageusement en pratique, l'ouverture centrale peut être située au fond d'une zone tronconique, de telle sorte que les grappes jugées conformes par les opérateurs sont déposées sur cette zone tronconique, et glissent par gravité jusqu'à l'ouverture centrale d'évacuation.

En pratique, la table de triage peut comporter les moyens pour ajuster la vitesse de rotation du plateau tournant au débit d'alimentation en vendange non triée, et à la capacité de triage des opérateurs.

En pratique, les grappes ou les éléments devant être éliminés peuvent être évacués manuellement par les opérateurs, qui extraient ainsi ces éléments indésirables pour les jeter dans des bacs de récolte des rebus. Grâce à l'invention, les éléments qui n'ont pas encore pu être examinés par les opérateurs demeurent sur la table de triage, et continuent leur parcours, tant qu'ils n'ont pas été soit éliminés, soit sélectionnés. Il est ainsi possible que certaines grappes fassent plusieurs passages successifs.

Dans une variante de réalisation, la machine peut également comporter des moyens pour évacuer automatiquement la vendange rejetée vers une évacuation des rebus lorsque cette dernière a effectuée un tour complet de la table. Ces moyens spécifiques peuvent par exemple être un déflecteur forçant la vendange non triée à sortir de la table de triage lorsqu'elle atteint une certaine position.

### Description sommaire des figures

La manière de réaliser l'invention, ainsi que les avantages qui en découlent ressortiront bien de la description du mode de réalisation qui suit, à l'appui des figures annexées dans lesquelles :
La figure 1 est une vue en perspective sommaire d'une table de triage conforme à l'invention, montrée dans son environnement de fonctionnement.
La figure 2 est une vue en coupe transversale de la table de triage illustrée à la figure 1.
La figure 3 est une vue de dessus d'un détail de la table de la figure 1, montrant un mécanisme d'élimination de la vendange non triée.

### Manière de réaliser l'invention

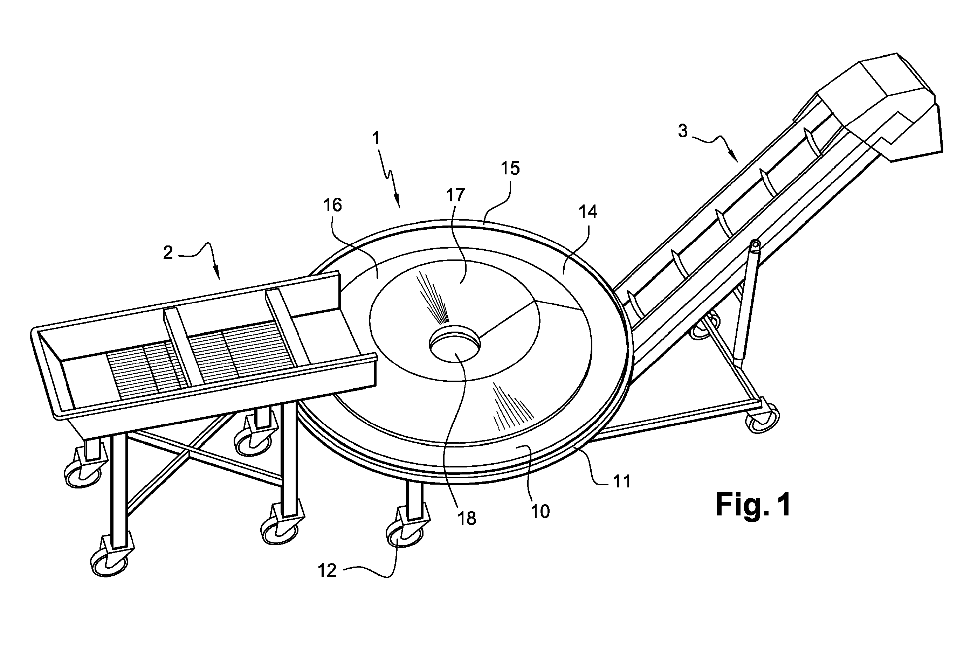

La table de triage (1) illustrée à la figure 1 s'insère dans la chaîne de traitement de la vendange entre un tapis vibrant (2) dans lequel sont éliminés une partie des déchets de très petite taille, et un convoyeur (3) permettant d'acheminer la vendange triée à destination d'un égrappoir ou de cuves de fermentation.

Bien entendu, l'invention ne concerne que la table de triage, et cette dernière pourrait s'insérer dans un autre environnement si besoin.

Plus précisément, la table (1) comporte un plateau tournant (10), mobile de rotation autour d'un châssis fixe (11), qui est monté sur un piétement (12) permettant de disposer le plateau (10) à une hauteur ergonomique. Ce plateau (12) comporte une zone périphérique (14) relativement plane, et limitée vers l'extérieur par une bordure (15) évitant aux grappes de chuter vers l'extérieur de la table. En se dirigeant vers le centre, le plateau (12) comporte un premier pan incliné tronconique (16), sur lequel peuvent chuter les grappes en provenance du tapis vibrant (2). La pente et les dimensions de cette portion tronconique (16) sont choisies pour permettre la retombée automatique des grappes sur la zone périphérique plane (14).

Le plateau comporte également dans sa partie centrale une deuxième zone tronconique (17), plus fortement inclinée, et dont le centre est occupé par l'ouverture caractéristique (18). Cette ouverture (18) se situe à l'aplomb d'une partie (20) du convoyeur (3).

La pente de la portion tronconique (17) est suffisante pour permettre le glissement ou le roulement des grappes vers l'ouverture d'évacuation (18). Cette pente est toutefois limitée pour éviter que les grappes ne prennent trop de vitesse et n'arrivent sur le convoyeur (20), avec des risques d'en chuter.

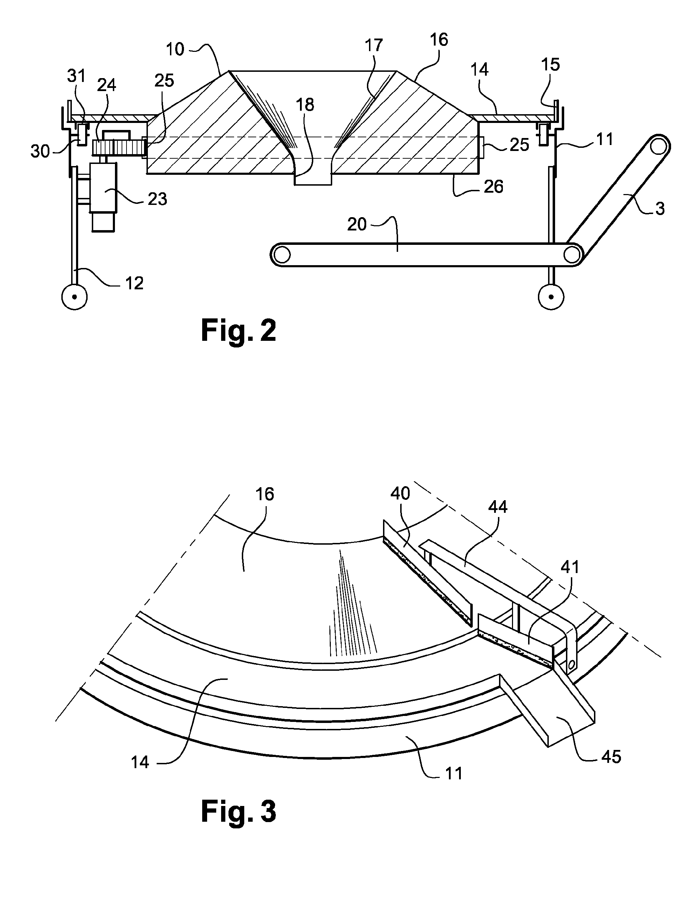

Dans la forme illustrée à la figure 2, le mouvement du plateau tournant (10) par rapport au châssis (11) est assuré par l'intermédiaire d'une motorisation (23). Ce moteur (23) entraîne, par un système de pignon, une couronne (25) présente sur une portion (26) s'étendant sous le plateau (10). Bien entendu, d'autres formes de motorisation et d'autres emplacements peuvent être envisagées sans sortir du cadre de l'invention.

De même, le plateau (10) repose sur le châssis (11) par l'intermédiaire de roulettes (30), circulant à l'intérieur des cornières (31) prévues à cet effet sous le plateau tournant (10). Il s'agit là d'un mode de réalisation particulier, et d'autres variantes concernant ce guidage et le support du plateau peuvent être mis en oeuvre sans sortir du cadre de l'invention.

### En pratique, le fonctionnement d'une invention est le suivant:

Lorsque les grappes de raisin en provenance du tapis vibrant (2) chutent sur le plateau (10) et en particulier sur le pan incliné (16) et la zone plane (14), le plateau tournant (11) est donc mis en rotation, de telle sorte que les grappes passent devant chacun des opérateurs qui sont répartis tout autour de la table (1). Ainsi, par un examen visuel, les opérateurs peuvent identifier les grappes conformes aux exigences de qualité. Ces grappes sont ainsi prises et jetées ou déposées sur le pan incliné (17), et chutent sur le convoyeur (20). De la sorte, seules les grappes ayant fait l'objet d'un choix positif poursuivent la chaîne en direction du pressurage.

En revanche, les grappes qui sont jugées impropres pour l'élaboration du vin sont soit extraites du plateau tournant, et jetées dans des bacs de récupération des rebus, soit éliminées de façon automatique par un dispositif comme illustré à la figure 3. Plus précisément, ce dispositif comporte deux raclettes (40, 41) qui viennent frotter sur le pan tronconique (16) et la portion plane (14). Ces raclettes (40, 41) sont solidaires du châssis (11) et sont montées sur ce dernier par l'intermédiaire d'un bras (44). Ces raclettes (40, 41) sont disposées avec une certaine inclinaison par rapport à la direction radiale du plateau tournant, de manière à acheminer les grappes restantes sur la table en direction d'une zone d'écoulement (45) par laquelle ces grappes non sélectionnées sont transférées dans un bac de rebus.

On notera que ces raclettes (40, 41) sont optionnelles et amovibles, et elles peuvent être mises en place uniquement dans le cas où les circonstances le requièrent. Ainsi, dans le cas où la quantité de vendanges à trier n'est pas trop importante, l'ensemble des grappes est soit sélectionné, soit rejeté manuellement avant d'atteindre cette zone d'éjection automatique. En revanche, dans le cas où il n'est pas souhaitable de rejeter manuellement les grappes, le dispositif de la figure 3 permet d'assurer leur éjection automatique. Ainsi, dans le cas où la quantité de vendange à trier est importante, on préférera enlever ce dispositif d'éjection automatique, pour permettre à la vendange d'effectuer plus d'un tour sur la table de triage.

La table de triage conforme à l'invention est réalisée en tout matériau présentant des qualités nécessaires pour un contact alimentaire, et facilitant un nettoyage aisé en particulier par jet d'eau. Il peut ainsi s'agir d'acier inoxydable au autre matériau approprié.

Il ressort de ce qui précède que la table de triage conforme à l'invention présente l'avantage d'assurer un triage optimisé dans la mesure où seules les grappes ayant fait l'objet d'une sélection passent au stade suivant du traitement de la vendange.

## Revendications

1. Table de triage pour vendange (1) permettant de trier manuellement la vendange par visite visuelle, comportant un plateau tournant (10) de forme générale circulaire sur la zone périphérique de laquelle est acheminée la vendange non triée, et une ouverture centrale (18), destinée à recevoir la vendange triée, et agencée à l'aplomb d'un convoyeur de sortie (20), **caractérisée en ce que** le plateau comporte une zone surélevée (16) située à l'intérieur de la zone périphérique (14), destinée à empêcher la vendange de tomber inopinément dans l'ouverture centrale (18).

2. Table de triage selon la revendication 1, **caractérisée en ce que** le plateau tournant (10) possède une zone périphérique sensiblement plane (14).

3. Table de triage selon la revendication 1, **caractérisée en ce que** l'ouverture centrale (18) est située au fond d'une zone tronconique (17).

4. Table de triage selon la revendication 1, **caractérisée en ce que** la zone surélevée présente une forme tronconique (16).

5. Table de triage selon la revendication 1, **caractérisée en ce qu'**elle comporte des moyens pour ajuster la vitesse de rotation du plateau tournant (10).

6. Table de triage selon la revendication 1, **caractérisée en ce qu'**elle comporte des moyens pour acheminer automatiquement la vendange présente sur le plateau (10), vers une évacuation des rebus (45).
